# EUROPEAN PATENT SPECIFICATION

(11) **EP 0 981 589 B1**
(45) Date of publication and mention of the grant of the patent: **03.04.2002**
(21) Application number: 98920249.4
(22) Date of filing: 08.05.1998
(51) Int. Cl.: C09J 201/02, D21H 27/32

(54) **ADHESIVE COMPOSITION PROVIDING A SIGNAL MEANS AND ADHESIVELY LAMINATED PAPER PRODUCT**
KLEBSTOFFZUSAMMENSETZUNG MIT ANZEIGEMITTEL UND GEKLEBTES LAMINIERTES PAPIERPRODUKT
COMPOSITION ADHESIVE FOURNISSANT UN SIGNAL VISUEL ET PRODUIT EN PAPIER CONTRECOLLE

(30) Priority: 09.05.1997 US 46118 P
(43) Date of publication of application: 01.03.2000
(73) Proprietor: THE PROCTER & GAMBLE COMPANY, Cincinnati, Ohio 45202 (US)
(72) Inventor: BOUTILIER, Glenn, David, Cincinnati, OH 45242 (US); BARFORD, Brian, Dale, West Chester, OH 45069 (US); BOATMAN, Donn, Nathan, Florence, KT 41042 (US); KRAUS, Christopher, Scott, Sunman, IN 47041 (US); PEKEL, Rhonda, Lee, Cincinnati, OH 45239 (US); WEGELE, George, Vincent, Cincinnati, OH 45227 (US)
(74) Representative: Mather, Peter Geoffrey
(86) International application number: US9809148
(87) International publication number: WO9850481

(56) References cited:
- WO-A-96/34149
- WO-A-97/11226
- GB-A- 1 111 954
- PATENT ABSTRACTS OF JAPAN vol. 018, no. 012 (C-1150), 11 January 1994 & JP 05 247889 A (OJI PAPER CO LTD), 24 September 1993

## Description

The present invention relates to adhesive compositions for cellulosic fibrous structures such as paper products, and more particularly to paper products having multiple plies which are adhesively joined together using such compositions.

Paper products are well known in everyday life. Paper products are frequently referred to as tissue, and are used for paper toweling, facial tissue, and bath tissue.

Tissue paper products may comprise a single ply, but frequently comprise two or more plies. As used herein, a "ply" refers to a single sheet taken off a forming wire, or the equivalent thereof, and dried without additional fibers being added thereto.

Of course, a ply may be layered with different cellulosic fibers. Layering provides the benefits that a central layer may comprise relatively strong fibers to impart strength to the tissue paper product. Outboard of the central layer may be shorter fibers which impart a soft tactile sensation to the user. Layering may be advantageously accomplished by commonly assigned U.S. Patent 3,994,771, issued November 30, 1976 to Morgan, Jr. et al., which patent is incorporated herein by reference.

Frequently, two or more plies are joined together to make the paper product. Joining multiple plies together provides the advantage that the resulting laminate has a lesser bending modulus than a single ply of equivalent thickness. This provides the benefit that, again, a softer tactile sensation is perceived by the user. Absorbency and caliper are typically improved as well. Furthermore, joining three plies together allows the paper product to have different central and outboard plies in the laminate, to provide strength and softness respectively.

Multi-ply tissue products are typically cellulosic. As used herein, "cellulosic" refers to a paper product comprising at least about fifty weight percent or at least about fifty volume percent cellulosic fibers including, but not limited to, cotton linters, rayon, bagasse, and more preferably wood pulps, such as softwoods (gymnosperms or coniferous) or hardwoods (angiosperms or deciduous), which fibers may be recycled. The balance of the fibers may be synthetic, such as polyolefin or polyester.

Cellulosic plies are frequently joined together by the use of an adhesive. Adhesive joining of cellulosic plies is advantageously described in commonly assigned U.S. Patent 5,143,776, issued September 1, 1992 to Givens, which patent is incorporated herein by reference.

However, adhesive joining of multiple cellulosic plies in a paper product can, and has, led to unsatisfactory performance. Particularly, paper products used as paper toweling, facial tissue, and bath tissue must have the proper ply bond strength. As used herein, "ply bond strength" refers to the force necessary to separate two adjacent plies from one another as described below.

Frequently tissue paper products, particularly paper toweling, are wetted in use. If the wet ply bond strength is insufficient, the plies separate in use and the paper product is destroyed. While it would seem an easy matter to simply increase the wet ply bond strength, the dry ply bond strength is directly coupled to the wet ply bond strength. In the prior art, as the wet ply bond strength increases to the proper level, the dry ply bond strength becomes too great. When the dry ply bond strength is too great, the softness and absorbency are typically reduced.

Commonly assigned U.S. Patent application Serial No. 08/524,316, filed in the names of Neal, et al. on September 6, 1995 discloses combinations of nonionic adhesive materials that provide dry ply bond strength to such adhesively joined plies and cationic wet strength resins that provide wet ply bond strength. Such adhesive compositions have been found to provide adhesively laminated multi ply paper products with adequate wet ply bond strength without having a dry ply bond strength that is too great.

It is also desirable to provide a user with a signal that such laminated paper toweling maintains its wet ply bond strength when the paper product becomes wetted during use. As is known in the art, many laminated paper towel products are provided with an aesthetically pleasing pattern of embossments with a laminating adhesive being disposed on the distal ends of such embossments for joining the plies together. It is also known that the pattern of embossments disappears when paper toweling becomes wetted. Commonly assigned U.S. Patent application Serial No. 08/749,708, filed in the names of Steinhardt, et al. on November 15, 1996 discloses the use of indicator means to maintain a pleasing pattern when paper toweling becomes wetted. One of the means disclosed therein is a laminating adhesive further comprising an opacifier, such as titanium dioxide. However, titanium dioxide pigment dispersions as are commonly available, also comprise an anionic dispersion aid to aid in preventing such dispersions from flocculating and settling out. Combining such anionically stabilized dispersions with cationic wet strength resins as have been found to provide enhanced wet ply bond strength would result in an adhesive composition that further provides a visual signal of the enhanced wet ply bond strength. However, the incompatibility of anionic materials and cationic materials is well known in the art.

Accordingly it is an object of this invention to provide a multi-ply paper product. It is further an object of this invention to provide an adhesive composition for a multi-ply paper towel product which provides adequate wet ply bond strength without having a dry ply bond strength which is too great along with a visual signal of the wet ply bond strength. Finally, it is an object of this invention to use such an adhesive composition to adhesively join the plies of a multi-ply cellulosic paper product to provide paper toweling with improved wet strength and a visual signal thereof.

The present invention provides an adhesive composition suitable for laminating a multi-ply cellulosic paper product. The adhesive composition comprises a mixture of:
(a) from 2% to 6% by weight of a water-soluble or water dispersible dry strength binder material selected from the group consisting of polyvinyl alcohol, polyvinyl acetates, carboxymethyl cellulose resins, starch based resins, polyacrylamide, guar bean gums, locust bean gums and mixtures thereof.
(b) from 1% to 4 % by weight of a water-soluble cationic wet strength resin, selected from the group consisting of polyamide-epichlorohydrin resins, glyoxalated polyacrylamides resins, styrene-butadiene latexes; insolubilized polyvinyl alcohol; urea-formaldehyde; polyethyleneimine; chitosan polymers and mixtures thereof.
(c) from 18% to 25% by weight of an anionically stabilized titanium dioxide pigment; and
(d) from 65% to 79% by weight water.

The adhesive composition may be prepared by blending an aqueous solution of the dry strength binder with the titanium dioxide dispersion. The cationic wet strength resin is also provided in an aqueous solution. Importantly, the pH of the aqueous cationic wet strength resin is adjusted to be above the isoelectric point of the titanium dioxide dispersion before the cationic wet strength resin solution is added to the dry strength binder titanium dioxide mixture. The adhesive composition of the present invention is in the form of a stable dispersion.

Preferably, the water-soluble/dispersible dry strength binder material is polyvinyl alcohol.

Preferably, the wet strength resins are water-soluble cationic resins selected from the group consisting of polyamide-epichlorohydrin resins, glyoxalated polyacrylamide resins, polyethyleneimine resins, and mixtures thereof.

The adhesive composition of the present invention is suitable for use as a laminating adhesive for multi-ply absorbent paper products. Preferably, at least one of the plies has embossments thereon, with the embossments extending outwardly from the plane of the ply towards and contacting the opposite ply. The plies are preferably joined together at said embossments using the adhesive composition of the present invention. Preferably, the adhesive composition is applied to the paper product at a level of from about 3 to about 85 grams per 3,000 square feet.

The paper product preferably has a wet ply bond strength of at least 4.5 grams per inch, and more preferably at least 5.0 grams per inch. The paper product further has a dry ply bond strength preferably from 4.0 to 20.0 grams per inch, and more preferably from 5.0 to 15.0 grams per inch. The paper product may comprise two, three, or more plies. Thus, the paper product according to the present invention has decoupled wet ply bond strength and dry ply bond strength contrary to the prior art.

All percentages, ratios, and proportions herein are by weight unless otherwise specified.

The present invention is described in more detail below.

While this specification concludes with claims particularly pointing out and distinctly claiming the subject matter regarded as the invention, it is believed that the invention can be better understood from a reading of the following detailed description and of the appended example.

As used herein, the term "comprising" means that the various components, ingredients, or steps, can be conjointly employed in practicing the present invention. Accordingly, the term "comprising" encompasses the more restrictive terms "consisting essentially of" and "consisting of".

The present invention comprises an adhesive composition and an adhesive laminate of two or more macroscopically monoplanar plies. The plies are cellulosic, as described below, and may be made according to the same manufacturing process, or according to different manufacturing processes.

### The Plies

Each ply may have a plurality of embossments protruding outwardly from the plane of the ply towards the adjacent ply. The adjacent ply likewise may have opposing protuberances protruding towards the first ply. If a three ply paper product is desired, the central ply may have embossments extending outwardly in both directions, although a central ply having no embossments or unidirectional embossments may be feasible.

The plies may be made according to commonly assigned U.S. Patents 4,637,859, issued January 20, 1987 to Trokhan; or 4,191,609, issued March 4, 1980 to Trokhan, which patents are incorporated herein by reference. Alternatively, the plies may be conventionally dried using felts.

For the present invention, each ply may have a basis weight of about 8 to 30, and preferably 11 to 18 pounds per 3,000 square feet, and preferably has a composition of hardwood and/or softwood processed by any of the means well known in the art.

After the papermaking process which forms the ply is complete, either or both plies may be embossed. Embossing may be accomplished according to the knob-to-knob embossing process illustrated by commonly assigned U.S. Patent 3,414,459, issued December 3,1968 to Wells; the nested embossing process illustrated in U.S. Patent 3,556,907, issued January 19, 1971 to Nystrand; or a dual ply process illustrated in commonly assigned U.S. Patent 5,294,475, issued March 15, 1994 to McNeil, all of which patents are incorporated herein by reference.

For the embodiments described and claimed herein, the embossments may be spaced on a pitch of 0.05 to 0.70 inches and may have an area at the distal end ranging from 0.001 to 0.100 square inches. Each embossment may be made on a roll having knobs which protrude 0 to 0.120 inches from the plane of the roll. The embossments may be round, oval shaped, or irregularly shaped.

The fibers comprising the plies of the paper product are preferably cellulosic, such as cotton linters, rayon or bagasse; and more preferably are wood pulp, such as soft woods (gymnosperms or coniferous) or hard woods (angiosperms or deciduous). As used herein, a laminated paper product is considered "cellulosic" if the laminated paper product comprises at least about 50 weight percent or at least about 50 volume percent cellulosic fibers, including but not limited to those fibers listed above. The balance of the fibers comprising the laminated paper product may be synthetic, such as polyolefin or polyester. A cellulosic mixture of wood pulp fibers comprising softwood fibers having a length of about 2.0 to about 4.5 millimeters and a diameter of about 25 to about 50 micrometers, and hardwood fibers having a length of less than about 1.7 millimeters and a diameter of about 12 to about 25 micrometers has been found to work well for the laminated paper products described herein.

If wood pulp fibers are selected for the multi-ply paper products of the present invention, the fibers may be produced by any pulping process including chemical processes, such as sulfite, sulfate and soda processes; and mechanical processes such as stone groundwood. Alternatively, the fibers may be produced by combinations of chemical and mechanical processes or may be recycled. The type, combination, and processing of the fibers used are not critical to the present invention. The hardwood and softwood fibers may be layered throughout the thickness of the laminated paper products or homogeneously blended therein.

### The Adhesive Composition

The plies of the multi-ply paper product are adhesively joined together. The adhesive composition is preferably applied to the embossments of at least one ply. Of course, the adhesive can be applied to the embossments of both plies. A suitable adhesive utilizes a mixture of a dry strength binder (e.g., a fully hydrolyzed polyvinyl alcohol adhesive), a cationic wet strength resin (e.g., a thermosetting cationic resin), and an anionically stabilized titanium dioxide slurry. Such an adhesive composition comprises between about 65 and 79 parts water, 2 to 6 parts dry strength binder solids, 1 to 4 parts cationic wet strength resin solids, and 18 to 25 parts titanium dioxide pigment. Each of these types of compounds will be described in detail below.

### Dry Strength Binder Materials

The adhesive composition of the present invention contains as an essential component from 2% to 6%, preferably from 3.5% to 6.0% by weight of a dry strength binder material chosen from the following group of materials: polyacrylamide (such as Accostrength 711 produced by CyTec Industries of West Paterson, N.J.); starch (such as RediBOND 5320, 2005, and 3030) available from National Starch and Chemical Company, Bridgewater, New Jersey, or Amylose 1100, 2200 or Salvitose available from Avebe Starch; polyvinyl alcohol (such as Evanol 71-30, supplied by the DuPont Corporation of Wilmington, Delaware); and/or guar or locust bean gums. Preferably, the dry strength binder materials are selected from the group consisting of polyvinyl alcohol, starch based resins, and mixtures thereof. The dry strength binder materials act to ensure that the multi-ply paper products of the present invention have adequate dry ply bond strength.

The polyvinyl alcohol component can be of any water-soluble or water-dispersible molecular weight sufficient to form an adhesive film. Generally, a weight average molecular weight of from about 40,000 to about 120,000, more preferably from 70,000 to 90,000 is preferred. Polyvinyl alcohol in solid form is commercially available under several trademarks such as Evanol (DuPont), GELVATOL® (Monsanto) VINOL® (Air Products) and POVAL® (KURARAY), These grades have a degree of hydrolysis ranging from about 80 to about 100%. Those skilled in the art will appreciate that lowering the degree of hydrolysis and the molecular weight will improve water solubility but will reduce adhesion. Therefore the properties of the polyvinyl alcohol will have to be optimized for the specific application. A particularly preferred polyvinyl alcohol is Evanol 71-30, supplied by the DuPont Corporation of Wilmington, Delaware. Evanol 71-30 has a molecular weight of about 77,000 and degree of hydrolysis of about 99%.

In general, suitable starch for practicing the present Invention is characterized by water solubility or stable dispersions and hydrophilicity. Exemplary starch materials include corn starch and potato starch, albeit it is not intended to thereby limit the scope of suitable starch materials; and waxy corn starch that is known industrially as amioca starch is preferred. Amioca starch differs from common corn starch in that it is entirely amylopectin, whereas common corn starch contains both amplopectin and amylose. Various unique characteristics of amioca starch are further described in "Amioca - The Starch from Waxy Corn", H. H. Schopmeyer, Food Industries, December 1945, pp. 106-108 (Vol. pp. 1476-1478). The starch can be in granular or dispersed form. RediBOND comes as a dispersed ready to use material. Granular starches such as Amylose 1100 are preferably sufficiently cooked to induce swelling of the granules. More preferably, the starch granules are swollen, as by cooking, to a point just prior to dispersion of the starch granule. Such highly swollen starch granules shall be referred to as being "fully cooked". The conditions for dispersion in general can vary depending upon the size of the starch granules, the degree of crystallinity of the granules, and the amount of amylose present. Fully cooked amioca starch, for example, can be prepared by heating an aqueous slurry of about 4X consistency of starch granules at about 190 °F (about 88 °C) for between about 30 and about 40 minutes. Other exemplary starch materials which may be used include modified cationic or anionic starches such as those modified to have nitrogen containing groups such as amino groups and methylol groups attached to nitrogen, available from National Starch and Chemical Company, (Bridgewater, NJ). Considering that such modified starch materials are more expensive than unmodified starches, the latter have generally been preferred.

### Wet Strength Resin Materials

The adhesive composition of the present invention contains as an essential component from about 1% to 4%, preferably from 1% to about 3% by weight of a wet strength resin material chosen from the following group of materials: polyamide-epichlorohydrin resins, glyoxalated polyacrylamides resins, styrene-butadiene latexes; insolubilized polyvinyl alcohol; urea-formaldehyde; polyethyleneimine; chitosan polymers and mixtures thereof. Preferably, the wet strength resins are water-soluble cationic resins selected from the group consisting of polyamide-epichlorohydrin resins, glyoxalated polyacrylamide resins, polyethyleneimine resins, and mixtures thereof.

Polyamide-epichlorohydrin resins are cationic wet strength resins which have been found to be of particular utility. Suitable types of such resins are described in U.S. Patent No. 3,700,623, issued on October 24, 1972, and 3,772,076, issued on November 13, 1973, both issued to Keim and both being hereby incorporated by reference. One commercial source of a useful polyamide-epichlorohydrin resin is Hercules, Inc. of Wilmington, DE, which markets such resins under the trademarks Kymene ™ 557H and Kymene ™ 557LX, with Kymene ™ 557H being preferred.

Preferably, the polyamide-epichlorohydrin resin comprises a water-soluble polymeric reaction product of epichlorohydrin, and a water-soluble polyamide having secondary amine groups. The ratio of epichlorohydrin to secondary amine groups of said polyamide is preferably from about 0.5 to 1 to about 2 to 1. Preferably, the water-soluble polyamide is derived from reacting a polyalkylene polyamine and a saturated aliphatic dibasic carboxylic acid containing from about 3 to 10 carbon atoms. Preferably the mole ratio of polyalkylene to dibasic carboxylic acid is from about 0.8 to 1 to about 1.5 to 1. Preferably the saturated aliphatic dibasic carboxylic acid is adipic acid and the polyakylene polyamine is diethylene triamine. Most preferably, the water-soluble polyamide contains recurring groups of the formula

-NH(CₙH₂ₙHN)ₓ-CORCO-

wherein n and x are each 2 or more and R is the divalent hydrocarbon radical of the dibasic carboxylic acid containing from about 3 to 10 carbon atoms. Resins of this type are commercially available under the trademarks KYMENE™ (Hercules, Inc.) and CASCAMID® (Borden). An essential characteristic of these resins is that they are phase compatible with the polyvinyl alcohol, i.e., they do not phase-separate in the presence of aqueous polyvinyl alcohol.

Base-activated polyamide-epichlorohydrin resins useful in the present invention are also sold by Hercules, Inc. of Wilmington, Delaware, which markets such resin under the trademark Kymeme™ 450. Other examples of commercial sources of base-activated polyamide-epichlorohydrin resins are sold under the Santo Res trademark, such as Santo Res 31, by Monsanto Company of St. Louis, Missouri. These types of materials are generally described in U.S. Patent Nos. 3,855,158 issued to Petrovich on December 17, 1974; 3,899,388 issued to Petrovich on August 12, 1975; 4,129,528 issued to Petrovich on December 12, 1978; 4,147,586 issued to Petrovich on April 3, 1979; and 4,222,921 issued to Van Eenam on September 16, 1980, all incorporated herein by reference.

Glyoxalated polyacrylamide resins have also been found to be of utility as wet strength resins. These resins are described in U.S. Patent No. 3,556,932, issued on January 19, 1971, to Coscia, et al. and 3,556,933, issued on January 19, 1971, to Williams et al., both patents being incorporated herein by reference. One commercial source of polyacrylamide resins is American Cyanamid Co. of Stanford, Connecticut, which markets one such resin under the trademark Parez ™ 631 NC.

Still other water-soluble cationic resins finding utility in this invention are urea formaldehyde and melamine formaldehyde resins. The more common functional groups of these polyfunctional resins are nitrogen containing groups such as amino groups and methylol groups attached to nitrogen. Polyethylenimine type resins may also find utility in the present invention.

### Pigment

As discussed in the Background of the Invention section above, it is desirable to provide a user with an indication that desirable properties, such as wet ply bond strength, are maintained when adhesively laminated paper products are wetted. Also as noted above and described in aforementioned U.S. Patent application Serial No. 08/749,708, the disclosure of which is incorporated herein by reference, laminating adhesive compositions comprising titanium dioxide (TiO₂) provide such a signal.

Two crystalline forms of TiO₂ exist, anatase and rutile. The rutile form is the most opaque due to its higher refractive index. Table 1 below compares the refractive index of pigments commonly used in the paper industry.

**Table 1**

| Compound | Refractive Index |
|---|---|
| Titanium Dioxide | |
| Rutile | 2.72 |
| Anatase | 2.55 |
| | |

| Kaolin Clays | |
|---|---|
| Filler | 1.57 |
| Calcined | 1.57 |
| | |

| Calcium Carbonate | |
|---|---|
| Natural Ground | 1.56 |
| PCC-Calcite | 1.66 |
| Talc | 1.57 |
| | |
| Precipitated Silica | 1.45 |

In the paper making art it is known that a given opacity can typically be achieved with about 15-20% less rutile that anatase.

Titanium dioxide is commercially available in both a dry powder form and as a slurry in water. For purposes of the present invention, the water slurry form is preferred because of ease of mixing with other components of the present adhesive composition.

In order that TiO₂ remain suspended additional, additional components are included in commercially available TiO₂ slurries. In particular, dispersion aids are used to insure that suspended TiO₂ particles do not flocculate and settle out. Dispersion aids are of two types: stearic stabilizers and electrostatic stabilizers. Stearic stabilizers surround the suspended TiO₂ particles with an absorbed layer of a polymer. Stearic interaction between the polymer layers on different particles prevents the particles from approaching closely enough such that they can agglomerate. Typically, stearically stabilized slurries are quite viscous because of the adsorbed layer of polymer. Titanium dioxide particles also can be stabilized electrostatically by surrounding them with a charged species. Such species can be either cationic or anionic. Because most TiO₂ is used by the paint and paper industries which both require anionic slurries for their processes, cationic TiO₂ slurries are uncommon. An example of a suitable anionic electrostatic suspension aid is the sodium polyacrylate described in U.S. Patent 4,503,172, issued in the name of Farrar, et al. on March 5, 1985. Such a material is available as Dispex N40V manufactured by from Allied Colloids of Suffolk, VA.

Using such a dispersion aid, the Applicants have developed an anionically stabilized TiO₂ slurry that is suitable for use in the adhesive compositions of the present invention. The TiO₂ slurry comprises (all percentages are by weight):

| | |
|---|---|
| a) titanium dioxide solids. (available from Kerr McGee Corp. of Oklahoma City, OK as TRONOX CR 834) | 49.6% |
| b) anionic dispersion aid (the aforementioned Dispex N40V) | 0.4% |
| c) water | 50.0% |

An alternative, commercially available TiO₂ slurry is Ti-Pure® RPS Vantage Rutile Paper Slurry which is available from the DuPont Company of Wilmington, DE.

As noted above, a preferred wet strength resin, Kymene™, is highly cationic and, therefore, when Kymene™ is combined with most anionic TiO₂ slurries it will quickly bind to the TiO₂ particles causing stratification and gelling of the adhesive composition. Surprisingly, the Applicants have found that by: 1) adjusting the pH of the wet strength resin solution such that the pH is greater than 7 and 2) prediluting the TiO₂ slurry with the dry strength binder solution before adding the pH-modified wet strength resin solution, adhesive compositions having TiO₂ stably suspended therein can be provided.

Without being bound by theory, the following is proposed as an explanation for the unexpectedly stable adhesive compositions. The compatibility of cationic wet strength resins, such as Kymene™ with an anionically stabilized TiO₂ slurry is dictated by at least the following factors.
1) The first is the amount and molecular weight of the anionic dispersing agent used. Enough dispersing agent should be used to completely coat the surface of each TiO₂ particle but not too much such that excess dispersing agent is present in the slurry (A cationic wet strength resin can react with any excess dispersing agent present).
2) The level of mixing when adding the cationic wet strength resin and the pH of the cationic wet strength resin when it is added to the composition also interact during formation of adhesive compositions comprising a cationic wet strength resin and an anionically stabilized TiO₂ slurry. This interaction may be explained in terms of the isoelectric point (IEP) of the TiO₂ slurry. As used herein, the term "isoelectric point" is the pH at which the charge of the TiO₂ slurry is zero. At this point, the electrostatic stabilization mechanism may be overcome and particle flocculation may occur. Electrostatically stabilized TiO₂ slurries are typically made up with a pH between 8 and 9 (i. e. well away from the IEP of about 4 to 5). However, when a cationic wet strength resin at an acidic native pH (Kymene pH is approximately 4.5) is added to a solution of a nonionic dry strength binder with TiO₂ particles suspended therein during formation of an adhesive composition, localized portions of the mixture may approach the IEP of the TiO₂ due to incomplete mixing. One indicator of such behavior is a rise in viscosity as the cationic wet strength resin is first introduced and then, with further mixing, viscosity drops back down. The criticality of turbulent mixing is obvious in that, if sufficient mixing is not maintained, the TiO₂ may agglomerate and settle out whenever the IEP is approached. The rise in viscosity as cationic wet strength resin is added makes it very difficult to maintain the level of agitation required to prevent localized regions of low pH. By adjusting the pH of the cationic wet strength resin solution so that it is greater than the IEP of the TiO₂ slurry, preferably so that it is at least about 7, before it is added to the blend of TiO₂ and a dry strength binder any localized regions of low pH can be eliminated and the electrostatic stabilization of the TiO₂ slurry is maintained.

### Adhesive Manufacture

By way of a nonlimiting example, the adhesive compositions of the present invention may comprise a polyvinyl alcohol solution or stable dispersion containing 10 percent solids, a Kymene™ 557H solution containing 12.5 percent solids, and an anionically stabilized TiO₂ slurry containing 71 percent TiO₂ solids. Tap water supplied at ambient temperature is also provided. The adhesive is then made, in order, from 40 parts polyvinyl alcohol solution, 18 parts water, 32 parts TiO₂ slurry, and 10 parts Kymene™ 557H solution. The water is added to the polyvinyl alcohol solution with mixing. The TiO₂ slurry is then added to the diluted polyvinyl alcohol solution and mixed for roughly ten minutes using an impeller type mixer. Concurrently, sufficient sodium hydroxide is added to the Kymene™ 557H solution to adjust the pH thereof to approximately 7. The pH-adjusted Kymene™ 557H solution is then added to the polyvinyl alcohol/TiO₂ slurry with vigorous mixing. Mixing is continued until the viscosity of the adhesive composition stabilizes. Preferably the pH of the final mixture is at least 7.0, to yield a proper cure rate for the Kymene™.

An alternative method of producing the adhesive composition has also been found to produce adhesives suitable for use in laminating multi-ply absorbent paper products. The steps of this alternative process use the same starting materials as described above. In this alternative process the order of addition is as follows:
a) The pH of the Kymene ™ 557 H solution is adjusted to approximately 7 by the addition of sodium hydroxide.
b) The pH-adjusted Kymene ™ solution is added to the TiO₂ slurry with mixing. Mixing is continued for at least 10 minutes to insure the blend is homogeneous.
c) The polyvinyl alcohol solution is added to the blend of Kymene ™ and TiO₂ with mixing. Mixing is continued for at least 10 minutes.

### Lamination

The foregoing example provides an adhesive composition having 5.25% total adhesive solids, of which 1.25% is Kymene ™ and 4% is a polyvinyl alcohol adhesive. The adhesive composition also comprises 23% TiO₂ solids. As noted above, the adhesive compositions of the present invention are suitable for use as a lamination adhesive for multi-ply absorbent paper products. The adhesive composition may be applied to a ply at a total adhesive solids quantity of about 3 to about 85 grams per 3,000 square feet, preferably the adhesive solids are applied at an add on of between about 4 and about 48 grams per 3,000 square feet, and more preferably between about 6 and about 20 grams per 3,000 square feet. For an adhesive composition having a constant amount total solids, as the amount of water-soluble cationic wet strength resin making up the constant total solids increases, generally a lesser quantity of the dry strength binder component may be applied to the ply. Alternatively stated, for a constant percentage of wet strength cationic resin relative to the dry strength binder material, as the quantity of total solids in the adhesive composition increases, the quantity of total solids applied to the ply generally increases.

A three-roll adhesive application system may be used to apply the adhesive compositions of the present invention. Using this system, adhesive is picked up as a film on the surface of a pickup roll. The adhesive film is then split in the nip between the pickup roll and a metering roll. The portion of the film remaining on the metering roll then transfers to an applicator roll where the adhesive film is again split. The film remaining on the applicator roll is applied to the embossments of a paper ply. The embossments of this ply are then brought in contact with another ply. The plies are adhesively joined together in the nip of a set of conventional marrying rolls.

Of course, the adhesive may be applied to the embossments in any other manner as are well known in the art and is commonly used for nested or knob-to-knob embossing processes as well. Suitable adhesive application systems include flexographic, spray systems, gravure systems, screen printing systems, as well as the three-roll system described above.

As the spacing and size of the protuberance decreases, a greater amount of adhesive may be applied to each protuberance for the embodiment described. The amount of adhesive may be increased either by using a relatively greater adhesive solids content in the adhesive composition, or by applying a larger quantity of the adhesive composition to the ply.

The resulting paper product according to the present invention comprises a laminate of two or more plies. Preferably, the paper product according to the present invention is a paper towel having a wet ply bond strength of at least about 4.5 grams per inch, and more preferably at least about 4.7 grams per inch.

The resulting paper product also preferably has a dry ply bond strength of 4.0 to 20.0 grams per inch, and more preferably 5.0 to 15.0 grams per inch. Wet and dry ply bond strengths are measured as follows.

### Dry Ply Bond Strength

Samples of four finished paper products are provided. One three inch strip running the entire length of the sample is cut from the center of each sample. Two of the strips are cut in the machine direction and the other two are cut in the cross machine direction (i.e., between perforations in the machine direction or between edges in the cross machine direction). The strips are separated slightly along either of the three inch edges, so that each ply is available independent of the other. The plies are manually separated until the sample has a gage length of two inches.

Each ply is placed in the jaw of a tensile machine. A suitable tensile tester is a Model 1451-24 supplied by the Thwing/Albert Corporation of Philadelphia, Pennsylvania. The crosshead separation speed is set at 20 inches per minute and travels 7.5 inches from an initial separation of 2.0 inches. Data is only recorded for the last six inches of crosshead travel. All four samples are tested in tension. The four numbers are then averaged to give a single ply bond strength representative of the product from which all four samples were taken.

Care must be taken that the portion of the sample yet to be separated by the tensile machine does not contact the lower jaw or the lower crosshead of the tensile machine. If such contact occurs, it will register on the load cell and give a reading which is erroneously high. Similarly, care must be taken that the portion of the sample yet to be separated does not contact the portion of the sample having the plies already separated by the tensile tester. If such contact occurs, it will falsely increase the apparent ply bond strength. If either of the aforementioned contacts occur, the data point is to be discarded and a new sample tested.

### Wet Ply Bond Strength

A single sample of the paper product is provided. The sample is aged at least two weeks after converting, in order to allow adequate cure time for the adhesive composition.

A three inch strip is cut from the center of the sample in the machine direction. The strip runs the entire machine direction length of the sample (e.g., between perforations).

The plies are separated along one of the three inch edges of the sample. The portion of the sample which has not been separated, i.e., the portion which is not to be placed in the jaws of the tensile machine, is immersed in distilled water. After immersion, the sample is immediately removed from the water and allowed to drain for 60 seconds on a draining rack. The draining rack is provided with a nylon wire square mesh. The wires forming the mesh are 0.015 inches diameter on a pitch of 0.25 inches. The drying rack is oriented at an angle of 45 degrees relative to the horizontal. While drying on the drying rack, the sample is oriented so that the longer edges of the sample are downwardly aligned with the slope of the drying rack. The separated edges of the ply are brought back together in the drying rack so that the sample is as smooth as possible, and the sample properly drains excess water. After having been prepared in this manner, the sample is then tested in the tensile machine as described above for the dry ply bond strength.

A nonlimiting example of one paper product made according to the present invention is illustrated below. The paper products made from two plies of cellulosic fibers as is commonly used in Bounty brand paper towels marketed by The Procter & Gamble Company of Cincinnati, Ohio and the assignee of the present invention. Each ply is made of 65 percent northern softwood Kraft, 35 percent CTMP, and has a basis weight of 14 pounds per 3,000 square feet. Each ply is embossed in a nested embossing process by elliptically shaped protuberances having at the distal end a major axis of 0.076 inches, a minor axis of 0.038 inches and a protuberance height of 0.070 inches. The protuberances are spaced in a two/three complementary concentric diamond pattern on a 45 degree pitch of about 0.118 inches. The protuberances comprise about 10 percent of the area of each ply. Two complementary plies are made and joined together at a zero clearance marrying nip, so that a unitary laminate having 42 ± 3 protuberances per square inch per ply is formed.

An adhesive composition, prepared as described above, is applied to the protuberances of one ply. The total solids of the adhesive composition is applied to the paper product. The resulting paper product has a wet ply bond strength of 5.1 grams per inch and a dry ply bond strength of 10.5 grams per inch.

In Table 2 the wet ply bond strength and the dry ply bond strength of paper towel products according to the present invention are compared to other commercially available paper towels.

**Table 2**

| BRAND | Manufacturer | WET PLY BOND STRENGTH (grams/inch) | DRY PLY BOND STRENGTH (grams/inch) |
|---|---|---|---|
| Present Invention | Assignee | 5.1 | 10.5 |
| BOUNTY* | Assignee | 3.7 | 14.7 |
| BRAWNY* | James River | 3.1 | 10.1 |
| SPARKLE* | Georgia Pacific | 3.0 | 7.0 |
| MARDIS GRAS* | Ft. Howard | 3.4 | 7.6 |
| VIVA 2-PLY* | Scott | 3.0 | 4.4 |
| HI-DRI* | Kimberly Clark | 3.4 | 5.5 |

| | | | |
|---|---|---|---|
| * Data from U.S. Patent application Serial No. 08/524,316 | | | |

Each of the wet and dry ply bond strengths in Table 2 represents an average of at least five samples. Of course, for the dry ply bond strength test, each of the five samples represents an average of four test specimens.

Variations in the disclosed structure are feasible. For example, one of the plies may be embossed and the other ply not embossed. Alternatively, neither ply may be embossed. In this embodiment, the two plies are joined together by discrete or continuous deposits of adhesive. Both the adhesively joined areas and the non-adhesively joined areas of each ply would lie within the plane of that ply.

## Claims

1. An adhesive composition for laminating an absorbent paper product, said adhesive composition comprising:
(a) from about 2% to about 6% by weight of a water-soluble or dispersible dry strength binder material; selected from the group consisting of polyvinyl alcohol, polyvinyl acetates, carboxymethyl cellulose resins, starch based resins, polyacrylamide, guar bean gums, locust bean gums, and mixtures thereof.
(b) from about 1% to about 4% by weight of a water soluble, cationic wet strength resin; selected from the group consisting of polyamide-epichlorohydrin resins, glyoxalated polyacrylamides resins, styrene-butadiene latexes; insolubilized polyvinyl alcohol; urea-formaldehyde; polyethyleneimine resins, chitosan polymers, and mixtures thereof.
(c) from about 18% to about 25% by weight of a pigment suspended in said adhesive composition; and
(d) from about 65% to about 79% by weight water;
**characterized in that**, when said composition is formed, said cationic wet strength resin is provided as a water solution having a pH, said pigment is provided as a slurry having an isoelectric point and said pH of said water solution of said cationic wet strength resin is adjusted to be greater than said isoelectric point before said water solution of said cationic wet strength resin and said pigment slurry are combined.

2. An adhesive composition according to any of the above claims wherein said pigment is selected from the group consisting of anatase and rutile.

3. An absorbent paper product, said paper product comprising at least two plies of paper, wherein said plies are adhesively laminated using an adhesive composition according to any of the above claims

4. An absorbent paper product according to Claim 3 wherein said adhesive composition is applied to said paper product at a level of from about 3 to about 85 grams per 3,000 square feet.

5. An absorbent paper product according to Claims 3 or 4 wherein at least one of said plies has embossments thereon, said embossments extending outwardly from the plane of said ply towards and contacting said opposite ply, said plies being joined together at said embossments.

6. An absorbent paper product according to Claims 3, 4, or 5 wherein said paper product is a paper towel.

## Patentansprüche

1. Haftmittelzusammensetzung zum Laminieren eines absorbierenden Papierprodukts, wobei die Haftmittelzusammensetzung umfaßt:
(a) von etwa 2 Gew.% bis etwa 6 Gew.% eines wasserlöslichen oder dispersiblen trockenfesten Bindermaterials; ausgewählt aus der Gruppe bestehend aus Polyvinylalkohol, Polyvinylacetate, Carboxymethyl-Zelluloseharze, auf Stärke basierende Harze, Polyacrylamid, Guarbohnengummi, Johannisbrotgummi und Mischungen daraus;
(b) von etwa 1 Gew.% bis etwa 4 Gew.% eines wasserlöslichen, kationischen naßfesten Harzes, ausgewählt aus der Gruppe bestehend aus Polyamid-Epichlorhydrinharzen, glyoxalierten Polyacrylamidharzen, Styren-Butadienlatexe; unlöslich gemachtem Polyvinylalkohol; Urea-Formaldehyd; Polyethyleniminharze; Chitosanharze; Chitosanpolymere und Mischungen daraus;
(c) von etwa 18 Gew.% bis etwa 25 Gew.% eines in der Haftmittelzusammensetzung in Suspension gehaltenen Pigments; und
(d) von etwa 65 Gew.% bis etwa 79 Gew.% Wasser;
**dadurch gekennzeichnet, daß**, wenn die Zusammensetzung gebildet wird, das kationische naßfeste Harz als eine wäßrige Lösung mit einem pH-Wert bereit gestellt wird, das Pigment als ein Brei mit einem isoelektrischen Punkt bereit gestellt wird und der pH-Wert der wäßrigen Lösung des kationischen naßfesten Harzes so eingestellt ist, daß dieser größer ist als der isoelektrische Punkt, bevor die wäßrige Lösung des kationischen naßfesten Harzes und der Pigmentbrei kombiniert werden.

2. Haftmittelzusammensetzung nach einem der obigen Ansprüche, in welcher das Pigment ausgewählt ist aus der Gruppe bestehend aus Anatas und Rutil.

3. Absorbierendes Papierprodukt, wobei das Papierprodukt wenigstens zwei Papierlagen umfaßt, wobei die Lagen unter Verwendung einer Haftmittelzusammensetzung gemäß einem der obigen Ansprüche haftend laminiert sind.

4. Absorbierendes Papierprodukt nach Anspruch 3, in welchem die Haftmittelzusammensetzung auf das Papierprodukt in einer Menge von etwa 3 bis etwa 85 Gramm pro 3.000 Qudratfuß aufgebracht ist.

5. Absorbierendes Papierprodukt nach den Ansprüchen 3 oder 4, in welchem wenigstens auf einer der Lagen Prägungen sind, wobei sich die Prägungen von der Ebene der Lage nach außen, zu der gegenüber liegenden Lage hin und diese berührend erstrecken, wobei die Lagen miteinander an den Prägungen verbunden sind.

6. Absorbierendes Papierprodukt nach den Ansprüchen 3, 4 oder 5, in welchem das Papierprodukt ein Papierhandtuch ist.

## Revendications

1. Composition adhésive pour stratifier un produit de papier absorbant, ladite composition adhésive comprenant :
(a) d'environ 2 % à environ 6 % en poids d'un liant de résistance à sec, dispersible ou soluble dans l'eau, choisi parmi le groupe comprenant l'alcool polyvinylique, les acétates de polyvinyle, les résines de carboxyméthyl cellulose, les résines à base d'amidon, les polyacrylamides, les gommes de guar, les gommes de caroube et leurs mélanges ;
(b) d'environ 1 % à environ 4 % en poids d'une résine de résistance à l'état humide cationique, soluble dans l'eau, choisie parmi le groupe comprenant les résines de polyamide-épichlorhydrine, les résines de polyacryamides glyoxylées, les latex de styrène-butadiène, l'alcool polyvinylique insolubilisé, l'urée-formaldéhyde, les résines de polyéthylène imine, les polymères de chitosan et leurs mélanges ;
(c) d'environ 18 % à environ 25 % en poids d'un pigment mis en suspension dans ladite composition adhésive ; et
(d) d'environ 65 % à environ 79 % en poids d'eau ;
**caractérisée en ce que**, lorsque ladite composition est formée, ladite résine de résistance à l'état humide cationique est fournie comme une solution aqueuse ayant un pH, ledit pigment est fourni comme une bouillie ayant un point isoélectrique et ledit pH de ladite solution aqueuse de ladite résine de résistance à l'état humide cationique est ajusté pour être supérieur audit point isoélectrique avant que ladite solution aqueuse de ladite résine de résistance à l'état humide cationique et la bouillie dudit pigment soient combinées.

2. Composition adhésive selon la revendication 1, dans laquelle ledit pigment est choisi parmi le groupe comprenant l'anastase et le rutile.

3. Produit de papier absorbant, ledit produit de papier comprenant au moins deux épaisseurs de papier, dans lequel lesdites épaisseurs sont stratifiées de façon adhésive en utilisant une composition adhésive selon l'une quelconque des revendications précédentes.

4. Produit de papier absorbant selon la revendication 3, dans lequel ladite composition adhésive est appliquée audit produit de papier à raison d'environ 3 à environ 85 grammes par 3 000 pieds carrés.

5. Produit de papier absorbant selon la revendication 3 ou 4, dans lequel au moins une desdites épaisseurs comporte des bossages, lesdits bossages se prolongeant vers l'extérieur depuis le plan de ladite épaisseur vers ladite épaisseur opposée et venant au contact de celle-ci, lesdites épaisseurs étant réunies conjointement auxdits bossages.

6. Produit de papier absorbant selon la revendication 3, 4 ou 5, dans lequel ledit produit de papier est une serviette en papier.
